# EUROPEAN PATENT APPLICATION

(11) **EP 4 800 797 A1**
(43) Date of publication of application: **02.09.2026**
(21) Application number: 24882930.1
(22) Date of filing: 28.10.2024
(51) Int. Cl.: H01M 10/0562, H01M 10/052

(54) **SOLID ELECTROLYTE, MANUFACTURING METHOD THEREOF, AND ALL-SOLID-STATE BATTERY COMPRISING SAME**

(30) Priority: 27.10.2023 KR 20230145571
(71) Applicant: POSCO Holdings Inc., Pohang-si, Gyeongsangbuk-do 37859 (KR)
(72) Inventor: OH, Gwangseok, Pohang-si, Gyeongsangbuk-do 37859 (KR); NAM, Sang Cheol, Pohang-si, Gyeongsangbuk-do 37859 (KR); KWON, Ohmin, Pohang-si, Gyeongsangbuk-do 37859 (KR)
(74) Representative: Pfenning, Meinig & Partner mbB
(86) International application number: PCT/KR2024/016573
(87) International publication number: WO 2025/089904

(57) **Abstract**

The present invention relates to a sulfide-based solid electrolyte comprising lithium (Li), phosphorus (P), sulfur (S), and a halogen element, having an Argyrodite-based crystal structure, wherein at least a portion of the crystal structure is doped with aluminum (Al) and tin (Sn), and having an ionic conductivity of 3.2 mS/cm or more at 30°C.

## Description

### [Technical Field]

The present invention relates to a solid electrolyte, a method for manufacturing the same, and an all-solid-state battery comprising the same.

### [Background Art]

As research on safety issues and energy density of high-capacity batteries receives attention, all-solid-state batteries are being spotlighted as next-generation batteries. By replacing an explosive liquid electrolyte with a solid electrolyte, the all-solid-state battery does not use a flammable solvent in the battery, and thus ignition or explosion due to a reaction such as a decomposition reaction of a conventional electrolyte does not occur at all, thereby ensuring the safety of the battery.

In addition, since lithium metal or a lithium alloy can be used as a negative electrode material, the energy density relative to the mass and volume of the battery can be improved. As the solid electrolyte used in the all-solid-state battery, an inorganic solid electrolyte is generally used, and various studies are being conducted on sulfide-based solid electrolytes having a composition such as Li₆PS₅Cl, which has an Argyrodite structure, among the all-solid-state batteries.

However, when the sulfide-based solid electrolyte is configured as a cell, there is a problem of exhibiting inferiority in cell characteristics due to low lithium-ion conductivity compared to liquid electrolytes used in conventional commercial lithium-ion batteries.

### [Detailed Description of the Invention]

### [Technical Problem]

Accordingly, an object of the present invention is to provide a sulfide-based solid electrolyte having excellent ionic conductivity, a method for manufacturing the same, and an all-solid-state battery comprising the same.

### [Technical Solution]

One embodiment of the present invention provides a sulfide-based solid electrolyte comprising lithium (Li), phosphorus (P), sulfur (S), and a halogen element, having an Argyrodite-based crystal structure, wherein at least a portion of the crystal structure is doped with aluminum (Al) and tin (Sn), and having an ionic conductivity of 3.2 mS/cm or more at 30°C.

In the solid electrolyte, a molar ratio of aluminum (Al) to phosphorus (P) ([Al]/[P]) may be 0.014 to 0.065.

In the solid electrolyte, a molar ratio of tin (Sn) to phosphorus (P) ([Sn]/[P]) may be 0.04 to 0.8.

In the solid electrolyte, a molar ratio of lithium (Li) to phosphorus (P) ([Li]/[P]) may be 5.5 to 6.5.

In the solid electrolyte, a molar ratio of sulfur (S) to phosphorus (P) ([S]/[P]) may be 4.5 to 5.5.

In the solid electrolyte, a molar ratio of the halogen element (D) to phosphorus (P) ([D]/[P]) may be 1.2 to 4.5.

The solid electrolyte may be represented by the following Chemical Formula 1:

[Chemical Formula 1] Li_{6(1-x-γ)}AlₓSn_{γ}P_{(1-x-γ)}S_{5(1-x-γ)}D_{1(1-x-γ)}+3ₓ+4_{γ}

In Chemical Formula 1, D is F, Cl, Br, I, or a combination thereof, 0.013 ≤ x ≤ 0.055, and 0.035 ≤ y ≤ 0.45.

In Chemical Formula 1, 0.02 ≤ x ≤ 0.035 may be satisfied.

In Chemical Formula 1, 0.08 ≤ y ≤ 0.17 may be satisfied.

The solid electrolyte may exhibit a peak in a range of 30.2° ≤ 2θ ≤ 30.3° during X-ray diffraction (XRD) pattern analysis.

Another embodiment of the present invention provides a method for manufacturing a sulfide-based solid electrolyte, comprising: forming a mixture by mixing a lithium raw material, a phosphorus raw material, a halogen element raw material, and a doping raw material; and heat-treating the mixture to form a sulfide-based solid electrolyte having an Argyrodite-based crystal structure, wherein the doping raw material comprises an aluminum (Al) compound and a tin (Sn) compound.

The aluminum compound may be AlCl₃.

The tin compound may be SnCl₄.

An input amount of the aluminum compound may be 0.013 to 0.055 mol% based on the total number of moles of the mixture.

An input amount of the tin compound may be 0.035 to 0.45 mol% based on the total number of moles of the mixture.

The heat treatment may be performed at a temperature of 400 to 700°C.

The heat treatment may be performed in an inert gas atmosphere.

Another embodiment of the present invention provides an all-solid-state battery comprising: a positive electrode layer; a negative electrode layer; and a solid electrolyte layer positioned between the positive electrode layer and the negative electrode layer, wherein at least one of the positive electrode layer, the negative electrode layer, and the solid electrolyte layer comprises the solid electrolyte according to above one embodiment.

### [Advantageous Effects]

In the sulfide-based solid electrolyte according to an embodiment of the present invention, at least a portion of the Argyrodite-based crystal structure is doped with aluminum (Al) and tin (Sn), so that ionic conductivity can be improved and electrochemical characteristics of a battery can be improved.

### [Brief Description of Drawings]

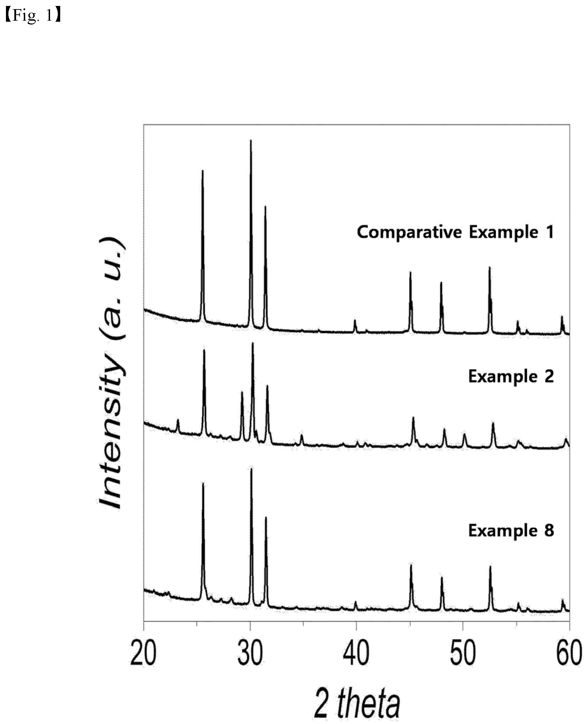

FIG. 1 is a graph showing XRD (X-ray diffraction) pattern analysis results of solid electrolytes manufactured according to Comparative Example 1, Example 2, and Example 8.

### [Mode for Carrying Out the Invention]

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Technical terms used herein are only for referring to specific embodiments and are not intended to limit the present invention. Singular forms used herein include plural forms unless the phrases clearly indicate the opposite meaning. The meaning of "comprising" used in the specification specifies a specific characteristic, region, integer, step, operation, element, and/or component, and does not exclude the presence or addition of another characteristic, region, integer, step, operation, element, and/or component.

When a part is referred to as being "above" or "on" another part, it may be directly above or on the other part, or another part may be involved therebetween. In contrast, when a part is referred to as being "directly above" another part, no other part is interposed therebetween.

Unless defined otherwise, all terms including technical and scientific terms used herein have the same meaning as commonly understood by one of ordinary skill in the art to which the present invention belongs. Terms defined in commonly used dictionaries are further interpreted as having meanings consistent with the related technical literature and the currently disclosed content, and are not interpreted in an ideal or very formal sense unless defined.

In addition, unless otherwise specified, % means weight %, and 1 ppm is 0.0001 weight %.

In the present specification, the term "combination(s) thereof" described in the Markush type expression means a mixture or combination of one or more selected from the group consisting of the components described in the Markush type expression, and means comprising any one or more selected from the group consisting of the components.

Hereinafter, embodiments of the present invention will be described in detail so that those of ordinary skill in the art to which the present invention belongs can easily implement them. However, the present invention may be implemented in various different forms and is not limited to the embodiments described herein.

### 1. Solid Electrolyte

A solid electrolyte according to an embodiment of the present invention is a sulfide-based solid electrolyte and has an Argyrodite-based crystal structure.

At this time, in the sulfide-based solid electrolyte according to an embodiment of the present invention, at least a portion of the Argyrodite-based crystal structure is doped with aluminum (Al) and tin (Sn). As at least a portion of the Argyrodite-based crystal structure is doped with aluminum and tin, a large number of vacancies due to lithium-ion deficiency can be generated. Accordingly, lithium-ion paths (channels) are diversely formed, so that the lithium-ion conductivity of the electrolyte is significantly improved, and electrochemical characteristics such as capacity, initial efficiency, and lifespan characteristics of a battery can be improved.

Meanwhile, in the sulfide-based solid electrolyte according to an embodiment of the present invention, aluminum and tin may be doped in doping amounts independent of each other. In other words, aluminum and tin do not have a certain correlation but can be randomly adjusted with independent doping amounts. Accordingly, the aforementioned effect of improving the performance of the solid electrolyte or battery can be preferably maximized.

At this time, in the solid electrolyte, a molar ratio of aluminum (Al) to phosphorus (P) ([Al]/[P]) may be 0.014 to 0.065, and more specifically, 0.02 to 0.04. If the molar ratio of aluminum to phosphorus is too small, the aluminum doping amount is too small, and thus the aforementioned effect of improving the performance of the solid electrolyte or battery may be insignificant. If the molar ratio of aluminum to phosphorus is too large, the Argyrodite-based crystal structure is significantly deformed according to excessive doping, so that lithium-ion movement is not smooth, and eventually, ionic conductivity may be significantly lowered. Therefore, when the molar ratio of aluminum to phosphorus satisfies the above range, the ionic conductivity of the electrolyte and the electrochemical characteristics of the battery can be preferably realized.

The solid electrolyte may have a molar ratio of tin (Sn) to phosphorus (P) ([Sn]/[P]) of 0.04 to 0.8, and more specifically, 0.1 to 0.2. If the molar ratio of tin to phosphorus is too small, the tin doping amount is too small, and thus the aforementioned effect of improving the performance of the solid electrolyte or battery may be insignificant. If the molar ratio of tin to phosphorus is too large, the Argyrodite-based crystal structure is significantly deformed according to excessive doping, so that lithium-ion movement is not smooth, and eventually, ionic conductivity may be significantly lowered. Therefore, when the molar ratio of tin to phosphorus satisfies the above range, the ionic conductivity of the electrolyte and the electrochemical characteristics of the battery can be preferably realized.

The solid electrolyte may have a molar ratio of lithium (Li) to phosphorus (P) ([Li]/[P]) of 5.5 to 6.5, and more specifically, 5.75 to 6.25. When the molar ratio of lithium to phosphorus satisfies the above range, the Argyrodite-based crystal structure is maintained intact, so that the ionic conductivity of the solid electrolyte or the electrochemical characteristics of the battery can be more preferably realized.

The solid electrolyte may have a molar ratio of sulfur (S) to phosphorus (P) ([S]/[P]) of 4.5 to 5.5, and more specifically, 4.75 to 5.25. When the molar ratio of sulfur to phosphorus satisfies the above range, the Argyrodite-based crystal structure is maintained intact, so that the ionic conductivity of the solid electrolyte or the electrochemical characteristics of the battery can be more preferably realized.

The solid electrolyte may have a molar ratio of the halogen element (D) to phosphorus (P) ([D]/[P]) of 1.2 to 4.5, and more specifically, 1.35 to 1.9. When the molar ratio of the halogen element to phosphorus satisfies the above range, the Argyrodite-based crystal structure is maintained intact, so that the ionic conductivity of the solid electrolyte or the electrochemical characteristics of the battery can be more preferably realized.

The solid electrolyte may be more specifically represented by the following Chemical Formula 1.

[Chemical Formula 1] Li_{6(1-x-γ)}AlₓSn_{γ}P_{(1-x-γ)}S_{5(1-x-γ)}D_{1(1-x-γ)}+3ₓ+4_{γ}

In Chemical Formula 1, D is F, Cl, Br, I, or a combination thereof, 0.013 ≤ x ≤ 0.055, and 0.035 ≤ y ≤ 0.45.

In Chemical Formula 1, x represents the doping amount of aluminum, which is a doping element, in the number of moles. At this time, 0.013 ≤ x ≤ 0.055, and more specifically, 0.02 ≤ x ≤ 0.035 may be satisfied.

If x is too small, the aluminum doping amount is too small, and thus the aforementioned effect of improving the performance of the solid electrolyte or battery may be insignificant. If x is too large, the Argyrodite-based crystal structure is significantly deformed according to excessive doping, so that lithium-ion movement is not smooth, and eventually, ionic conductivity may be significantly lowered. Therefore, when x satisfies the above range, the ionic conductivity of the electrolyte and the electrochemical characteristics of the battery can be preferably realized.

In Chemical Formula 1, y represents the doping amount of tin, which is a doping element, in the number of moles. At this time, 0.035 ≤ y ≤ 0.45, and more specifically, 0.08 ≤ y ≤ 0.17 may be satisfied.

If y is too small, the tin doping amount is too small, and thus the aforementioned effect of improving the performance of the solid electrolyte or battery may be insignificant. If y is too large, the Argyrodite-based crystal structure is significantly deformed according to excessive doping, so that lithium-ion movement is not smooth, and eventually, ionic conductivity may be significantly lowered. Therefore, when y satisfies the above range, the ionic conductivity of the electrolyte and the electrochemical characteristics of the battery can be preferably realized.

In Chemical Formula 1, D means a halogen element, and more specifically, may be F, Cl, Br, I, or a combination thereof.

More specifically, D may be chlorine (Cl). By using chlorine among the halogen elements, there may be an effect of stabilizing the structure of the Argyrodite-based solid electrolyte and advantages of being easier to synthesize than other elements and having a low price.

Such solid electrolyte may be particles or powder, and may be crystalline or amorphous.

In addition, the solid electrolyte may exhibit a peak in a range of 30.2° ≤ 2θ ≤ 30.3° during X-ray diffraction (XRD) pattern analysis. Since a peak in the above range means an Argyrodite-based crystal phase, the ionic conductivity of the solid electrolyte and the electrochemical characteristics of the battery can be preferably realized by comprising the crystal phase.

Meanwhile, the solid electrolyte may have an ionic conductivity of 3.2 mS/cm or more at 30°C, and more specifically, 3.5 mS/cm, 4.0 mS/cm, or 4.1 mS/cm or more.

### 2. Method for Manufacturing Solid Electrolyte

Another embodiment of the present invention provides a method for manufacturing a sulfide-based solid electrolyte, comprising: forming a mixture by mixing a lithium raw material, a phosphorus raw material, a halogen element raw material, and a doping raw material; and heat-treating the mixture to form a sulfide-based solid electrolyte having an Argyrodite-based crystal structure, wherein the doping raw material comprises an aluminum (Al) compound and a tin (Sn) compound.

Hereinafter, the method for manufacturing a sulfide-based solid electrolyte according to another embodiment of the present invention will be described step by step.

First, a mixture is formed by mixing a lithium raw material, a phosphorus raw material, a halogen element raw material, and a doping raw material.

The lithium raw material may be, for example, Li₂S, Li₂S₂, or a combination thereof, but is not necessarily limited thereto.

The phosphorus raw material may be, for example, P₂S₅, P₂O₅, or a combination thereof, but is not necessarily limited thereto.

The halogen element raw material may be, for example, LiF, LiCl, LiBr, LiI, or a combination thereof, but is not necessarily limited thereto. The halogen element raw material may be, more specifically, LiCl.

The aluminum compound is not particularly limited as long as it is a compound containing aluminum, and may be, for example, AlCl₃, Al₂O₃, or a combination thereof.

The aluminum compound may be, more specifically, AlCl₃. By using AlCl₃ as the aluminum compound, there is an advantage in that a composition rich in Cl content can be designed while doping Al at the same time.

The tin compound is not particularly limited as long as it is a compound containing tin, and may be, for example, SnCl₄, SnS₂, or a combination thereof.

The tin compound may be, more specifically, SnCl₄. By using SnCl₄ as the tin compound, there is an advantage in that a composition rich in Cl content can be designed while doping Sn at the same time.

An input amount of the aluminum compound may be 0.013 to 0.055 mol% based on the total number of moles of the mixture, and more specifically, 0.02 to 0.035 mol%. When the input amount of the aluminum compound satisfies the above range, the aluminum doping amount is doped in the aforementioned range, so that the ionic conductivity of the electrolyte and the electrochemical characteristics of the battery can be preferably realized.

An input amount of the tin compound may be 0.035 to 0.45 mol% based on the total number of moles of the mixture, and more specifically, 0.08 to 0.17 mol%. When the input amount of the tin compound satisfies the above range, the tin doping amount is doped in the aforementioned range, so that the ionic conductivity of the electrolyte and the electrochemical characteristics of the battery can be preferably realized.

The mixing may be performed by mechanical mixing or chemical mixing.

The mechanical mixing may be performed by a method such as, for example, a planetary mill, a paint shaker, a ball mill, a bead mill, a homogenizer, a hammer mill, a turbo mill, a disc mill, a planetary mill, mechanofusion, and the like.

The chemical mixing may be performed by, for example, a melt quenching method.

The mixing may be performed for 4 to 12 hours, specifically for 6 to 10 hours, and more specifically for 7 to 9 hours. If the mixing time is too short, a problem of insufficient mixing may occur. If the mixing time is too long, the mixing is completed within a certain time, and the mixed state becomes the same even if the mixing is further proceeded, which may cause a problem in terms of process efficiency.

The mixing may be performed at a rotation speed of 100 to 500 rpm, specifically 150 to 450 rpm, and more specifically 200 to 400 rpm. If the rotation speed is too slow, the balls cannot enter the inside of the powder, which may cause a problem of overall insufficient mixing between powder particles or insufficient atomization of powder particles due to low energy. On the other hand, if the rotation speed is too fast, the powder may be biased in one place, which may cause a problem of uneven mixing.

Next, optionally as needed, after the step of forming the mixture, a step of forming a pellet by compressing the mixture may be further included.

At this time, the compression may be performed at a pressure of 100 to 500 MPa, specifically 150 to 450 MPa, and more specifically 200 to 400 MPa. If the pressure is too low, a problem of high interfacial resistance may occur due to insufficient binding between powder particles. On the other hand, if the pressure is too high, the binding between powder particles has already been achieved, and the binding state does not change even if further pressure is applied, which may cause a problem in terms of process efficiency. Therefore, forming a pellet at an appropriate pressure is preferable in terms of productivity.

Next, the mixture is heat-treated to form a sulfide-based solid electrolyte having an Argyrodite-based crystal structure.

At this time, the heat treatment may be performed at a temperature of 400 to 700°C, and more specifically, 500 to 600°C. If the heat treatment temperature is too low, synthesis of the solid electrolyte having an Argyrodite-based crystal structure may not sufficiently occur, or it may be synthesized into an amorphous crystal structure, thereby lowering the ionic conductivity of the solid electrolyte. If the heat treatment temperature is too high, elements constituting the solid electrolyte may vaporize, resulting in loss of the solid electrolyte or generation of an impurity phase, which may lower the ionic conductivity of the solid electrolyte.

In addition, the heat treatment may be performed for 2 to 8 hours, and more specifically, for 3 to 5 hours. If the heat treatment time is too short, synthesis of the solid electrolyte having an Argyrodite-based crystal structure may not sufficiently occur, or it may be synthesized into an amorphous crystal structure, thereby lowering the ionic conductivity of the solid electrolyte. If the heat treatment time is too long, elements constituting the solid electrolyte may vaporize, resulting in loss of the solid electrolyte or generation of an impurity phase, which may lower the ionic conductivity of the solid electrolyte.

In addition, the heat treatment may be performed in an inert gas atmosphere. As the heat treatment is performed in an inert gas atmosphere, there may be an advantage of blocking contact with atmospheric moisture. The inert gas atmosphere may be, for example, an Ar, N₂, H₂, or He atmosphere, and more specifically, an Ar atmosphere.

### 3. All-Solid-State Battery

Another embodiment of the present invention provides an all-solid-state battery comprising: a positive electrode layer; a negative electrode layer; and a solid electrolyte layer positioned between the positive electrode layer and the negative electrode layer, wherein at least one of the positive electrode layer, the negative electrode layer, and the solid electrolyte layer comprises the aforementioned solid electrolyte.

### (Positive Electrode Layer)

The positive electrode layer may more specifically comprise a positive electrode current collector and a positive electrode active material layer disposed on the positive electrode current collector.

The positive electrode active material layer may, for example, comprise a positive electrode active material and, optionally as needed, further comprise a solid electrolyte. The solid electrolyte included in the positive electrode active material layer may be the same as or different from the solid electrolyte according to an embodiment of the present invention, and may be the same as or different from the solid electrolyte included in the solid electrolyte layer.

The positive electrode active material is a material capable of reversibly absorbing and desorbing lithium ions. The positive electrode active material is, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium iron phosphate, nickel sulfide, copper sulfide, lithium sulfide, iron oxide, or vanadium oxide, but is not necessarily limited thereto, and any material used as a positive electrode active material in the art may be used. The positive electrode active materials are each used alone or as a mixture of two or more types.

The lithium transition metal oxide is, for example, a compound represented by any one of the following chemical formulas: LiₐA_{1-β}B_{sβ}D₂ (wherein 0.90 ≤ a ≤ 1 and 0 ≤ b < 0.5); LiₐE_{1-β}B_{β}O_{2-c}D_{c} (wherein 0.90 ≤ a ≤ 1, 0 ≤ b < 0.5, and 0 ≤ c ≤ 0.05); LiE_{2-β}B_{β}O_{4-c}D_{c} (wherein 0 ≤ b < 0.5 and 0 ≤ c ≤ 0.05); LiₐNi_{1-β-c}Co_{β}B_{c}Dα (wherein 0.90 ≤ a ≤ 1, 0 ≤ b ≤ 0.5, 0 < c ≤ 0.05, and 0 ≤ α ≤ 2); LiₐNi_{1-β-c}Co_{β}B_{c}O₂₋αFα (wherein 0.90 ≤ a ≤ 1, 0 ≤ b ≤ 0.5, 0 < c ≤ 0.05, and 0 < α < 2); LiₐNi_{1-β-c}Co_{β}B_{c}O₂₋αF₂ (wherein 0.90 ≤ a ≤ 1, 0 ≤ b ≤ 0.5, 0 ≤ c ≤ 0.05, and 0 < α < 2); LiₐNi_{1-β-c}Mn_{β}B_{c}Dα (wherein 0.90 ≤ a ≤ 1, 0 ≤ b ≤ 0.5, 0 ≤ c ≤ 0.05, and 0 < α ≤ 2); LiₐNi_{1-β-c}Mn_{β}B_{c}O₂-αFα (wherein 0.90 ≤ a ≤ 1, 0 ≤ b ≤ 0.5, 0 ≤ c ≤ 0.05, and 0 < α < 2); LiₐNi_{1-β-c}Mn_{β}B_{c}O₂-αF₂ (wherein 0.90 ≤ a ≤ 1, 0 ≤ b ≤ 0.5, 0 < c ≤ 0.05, and 0 < α < 2); LiₐNi_{β}E_{c}G_{d}O₂ (wherein 0.90 ≤ a ≤ 1, 0 ≤ b ≤ 0.9, 0 < c ≤ 0.5, and 0.001 ≤ d ≤ 0.1); LiₐNi_{β}Co_{c}Mn_{d}GₑO₂ (wherein 0.90 ≤ a ≤ 1, 0 ≤ b ≤ 0.9, 0 ≤ c ≤ 0.5, 0 ≤ d ≤ 0.5, and 0.001 < e ≤ 0.1); LiₐNiG_{β}O₂ (wherein 0.90 ≤ a ≤ 1 and 0.001 ≤ b ≤ 0.1); LiₐCoG_{β}O₂ (wherein 0.90 ≤ a ≤ 1 and 0.001 ≤ b < 0.1); LiₐMnG_{β}O₂ (wherein 0.90 ≤ a ≤ 1 and 0.001 ≤ b ≤ 0.1); LiₐMn₂G_{β}O₄ (wherein 0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (0 < f ≤ 2); Li_{(3-f)}Fe₂(PO₄)₃ (0 ≤ f ≤ 2); and LiFePO₄. In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound in which a coating layer is added to the surface of these compounds, and it is also possible to use a mixture of the aforementioned compounds and compounds to which a coating layer is added. The coating layer added to the surface of these compounds comprises, for example, a coating element compound of an oxide of a coating element, a hydroxide, an oxyhydroxide of a coating element, an oxycarbonate of a coating element, or a hydroxycarbonate of a coating element. The compounds forming these coating layers are amorphous or crystalline. Coating elements included in the coating layer include Mg, Al, Co, K, Na, Ca, Si, Ti, V, Sn, Ge, Ga, B, As, Zr, or a mixture thereof. The coating layer forming method is selected within a range that does not adversely affect the physical properties of the positive electrode active material. The coating method is, for example, spray coating, a dipping method, and the like. Since the specific coating method is well understood by those skilled in the art, a detailed description will be omitted.

The positive electrode active material layer may, for example, comprise a binder. The binder is, for example, styrene-butadiene rubber (SBR), polytetrafluoroethylene, polyvinylidene fluoride, polyethylene, and the like, but is not limited thereto, and any material used as a binder in the art may be used.

The positive electrode active material layer may, for example, comprise a conductive material. The conductive material is, for example, graphite, carbon black, acetylene black, Ketjen black, carbon fiber, metal powder, and the like, but is not limited thereto, and any material used as a conductive material in the art may be used.

The positive electrode active material layer may, for example, further comprise additives such as a filler, a coating agent, a dispersant, and an ion-conducting auxiliary, in addition to the aforementioned positive electrode active material, solid electrolyte, binder, and conductive material.

As the filler, coating agent, dispersant, ion-conducting auxiliary, and the like that the positive electrode active material layer may comprise, known materials generally used for electrodes of all-solid-state secondary batteries can be used.

As the positive electrode current collector, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof can be used. The thickness of the positive electrode current collector may be, for example, 1 µm to 100 µm, 1 µm to 50 µm, 5 µm to 25 µm, or 10 µm to 20 µm.

### (Negative Electrode Layer)

The negative electrode layer may more specifically comprise a negative electrode current collector and a negative electrode active material layer disposed on the negative electrode current collector.

The negative electrode active material layer may, for example, comprise a negative electrode active material and a binder, and may optionally further comprise a solid electrolyte as needed.

The negative electrode active material may comprise, for example, a carbon-based negative electrode active material, a metal/metalloid negative electrode active material, or a combination thereof.

The carbon-based negative electrode active material may be amorphous carbon, crystalline carbon, or a mixture or composite thereof. The amorphous carbon is, for example, carbon black (CB), acetylene black (AB), furnace black (FB), Ketjen black (KB), graphene, and the like, but is not necessarily limited thereto, and any material classified as amorphous carbon in the art may be used. Amorphous carbon is carbon that has no crystallinity or very low crystallinity and is distinguished from crystalline carbon or graphite-based carbon. The crystalline carbon may be, for example, natural graphite, artificial graphite, or a combination thereof.

The metal/metalloid negative electrode active material comprises at least one selected from the group consisting of lithium (Li), gold (Au), platinum (Pt), palladium (Pd), silicon (Si), silver (Ag), aluminum (Al), bismuth (Bi), tin (Sn), and zinc (Zn), but is not necessarily limited thereto, and any material used in the art as a metal negative electrode active material or a metalloid negative electrode active material that forms an alloy or compound with lithium may be used.

The binder included in the negative electrode active material layer is, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, and the like, but is not necessarily limited thereto, and any material used as a binder in the art may be used. The binder may consist of a single binder or a plurality of different binders.

By the negative electrode active material layer comprising the binder, the negative electrode active material layer is stabilized on the negative electrode current collector. In addition, cracking of the negative electrode active material layer is suppressed despite volume changes and/or relative positional changes of the negative electrode active material layer during the charge/discharge process.

The negative electrode active material layer may further comprise additives used in conventional all-solid-state batteries, such as a filler, a coating agent, a dispersant, and an ion-conducting auxiliary.

The all-solid-state battery may further comprise a second negative electrode active material layer disposed between the negative electrode current collector and the negative electrode active material layer by charging. The second negative electrode active material layer may be deposited between the negative electrode current collector and the negative electrode active material layer during the charging process, or may be further disposed on the negative electrode active material layer during electrode assembly. Such second negative electrode active material layer may be a metal layer comprising lithium or a lithium alloy. The lithium alloy is, for example, a Li-Al alloy, a Li-Sn alloy, a Li-In alloy, a Li-Ag alloy, a Li-Au alloy, a Li-Zn alloy, a Li-Ge alloy, a Li-Si alloy, and the like, but is not limited thereto, and any material used as a lithium alloy in the art may be used. The second negative electrode active material layer may consist of one of these alloys and/or lithium, or may consist of several types of alloys and/or lithium.

The negative electrode current collector may be composed of, for example, a material that does not react with lithium, that is, does not form both an alloy and a compound. The negative electrode current collector may comprise, for example, copper (Cu), stainless steel, titanium (Ti), iron (Fe), cobalt (Co), and nickel (Ni), and the like, but is not necessarily limited thereto, and any material used as an electrode current collector in the art may be used. The negative electrode current collector may be composed of one of the aforementioned metals, or an alloy or coating material of two or more metals. The negative electrode current collector may be, for example, in the form of a plate or foil.

When the negative electrode active material layer comprises a solid electrolyte, the solid electrolyte included in the negative electrode active material layer may be the same as or different from the solid electrolyte according to an embodiment of the present invention, and may be the same as or different from the solid electrolyte included in the solid electrolyte layer.

### (Solid Electrolyte Layer)

The solid electrolyte layer may be manufactured by mixing and drying the aforementioned solid electrolyte and a binder, or may be manufactured by rolling the aforementioned solid electrolyte powder into a certain shape at a pressure of 1 ton to 10 tons.

At this time, the solid electrolyte may be in the form of powder or a molded product. The solid electrolyte in the form of a molded product may be, for example, in the form of a pellet, a sheet, a thin film, and the like, but is not necessarily limited thereto and may have various forms depending on the intended use.

The solid electrolyte layer may, as needed, further comprise a solid electrolyte such as a conventional sulfide-based solid electrolyte and/or an oxide-based solid electrolyte in addition to the aforementioned solid electrolyte.

The binder is, for example, styrene-butadiene rubber (SBR), polytetrafluoroethylene, polyvinylidene fluoride, polyethylene, polyvinyl alcohol, and the like, but is not limited thereto, and any material used as a binder in the art may be used. The binder of the solid electrolyte layer may be the same as or different from the binders of the positive electrode layer and the negative electrode layer.

Another embodiment of the present invention provides an electric vehicle comprising the all-solid-state battery.

Hereinafter, embodiments of the present invention will be described in detail through examples. However, the following examples are merely preferred embodiments of the present invention, and the present invention is not limited by the following examples.

### Example 1: Manufacture of Li₅.₅₈Al₀.₀₂Sn₀.₀₅P₀.₉₃S₄.₆₅Cl₁.₁₉ Solid Electrolyte

Reactants Li₂S, P₂S₅, LiCl, AlCl₃, and SnCl₄ were quantified such that x = 0.02 and y = 0.05 in the final product Li_{6(1-x-γ)}AlₓSn_{γ}P_{(1-x-γ)}S_{5(1-x-γ)}Cl_{1(1-x-γ)}+3ₓ+4_{γ} solid electrolyte, AlCl₃ was set to 0.02 mol% based on 100 mol% of the total reactants, and SnCl₄ was set to 0.05 mol% based on 100 mol% of the total reactants, and they were mixed at 300 rpm for about 8 hours using a planetary mill to form a mixture.

Next, a pressure of 300 MPa was applied to the mixture to form a pellet.

Next, the pellet was heat-treated at 550°C for about 4 hours in an argon (Ar) atmosphere to manufacture a Li₅.₅₈Al₀.₀₂Sn₀.₀₅P₀.₉₃S₄.₆₅Cl₁.₁₉ solid electrolyte.

### Example 2: Manufacture of Li₅.₂₈Al₀.₀₂Sn₀.₁P₀.₈₈S₄.₄Cl₁.₃₄ Solid Electrolyte

Li₅.₂₈Al₀.₀₂Sn₀.₁P₀.₈₈S₄.₄Cl₁.₃₄ solid electrolyte was manufactured in the same manner as in Example 1, except that x = 0.02 and y = 0.1, AlCl₃ was set to 0.02 mol% based on 100 mol% of the total reactants, and SnCl₄ was set to 0.1 mol% based on 100 mol% of the total reactants.

### Example 3: Manufacture of Li₄.₉₈Al₀.₀₂Sn₀.₁₅P₀.₈₃S₄.₁₅Cl₁.₄₉ Solid Electrolyte

Li₄.₉₈Al₀.₀₂Sn₀.₁₅P₀.₈₃S₄.₁₅Cl₁.₄₉ solid electrolyte was manufactured in the same manner as in Example 1, except that x = 0.02 and y = 0.15, AlCl₃ was set to 0.02 mol% based on 100 mol% of the total reactants, and SnCl₄ was set to 0.15 mol% based on 100 mol% of the total reactants.

### Example 4: Manufacture of Li₄.₆₈Al₀.₀₂Sn₀.₂P₀.₇₈S₃.₉Cl₁.₆₄ Solid Electrolyte

Li₄.₆₈Al₀.₀₂Sn₀.₂P₀.₇₈S₃.₉Cl₁.₆₄ solid electrolyte was manufactured in the same manner as in Example 1, except that x = 0.02 and y = 0.2, AlCl₃ was set to 0.02 mol% based on 100 mol% of the total reactants, and SnCl₄ was set to 0.2 mol% based on 100 mol% of the total reactants.

### Example 5: Manufacture of Li₄.₀₈Al₀.₀₂Sn₀.₃P₀.₆₈S₃.₄Cl₁.₉₄ Solid Electrolyte

Li₄.₀₈Al₀.₀₂Sn₀.₃P₀.₆₈S₃.₄Cl₁.₉₄ solid electrolyte was manufactured in the same manner as in Example 1, except that x = 0.02 and y = 0.3, AlCl₃ was set to 0.02 mol% based on 100 mol% of the total reactants, and SnCl₄ was set to 0.3 mol% based on 100 mol% of the total reactants.

### Example 6: Manufacture of Li₃.₄₈Al₀.₀₂Sn₀.₄P₀.₅₈S₂.₉Cl₂.₂₄ Solid Electrolyte

Li₃.₄₈Al₀.₀₂Sn₀.₄P₀.₅₈S₂.₉Cl₂.₂₄ solid electrolyte was manufactured in the same manner as in Example 1, except that x = 0.02 and y = 0.4, AlCl₃ was set to 0.02 mol% based on 100 mol% of the total reactants, and SnCl₄ was set to 0.4 mol% based on 100 mol% of the total reactants.

### Example 7: Manufacture of Li₅.₃₁Al₀.₀₁₅Sn₀.₁P₀.₈₈₅S₄.₄₂₅Cl₁.₃₃ Solid Electrolyte

Li₅.₃₁Al₀.₀₁₅Sn₀.₁P₀.₈₈₅S₄.₄₂₅Cl₁.₃₃ solid electrolyte was manufactured in the same manner as in Example 1, except that x = 0.015 and y = 0.1, AlCl₃ was set to 0.015 mol% based on 100 mol% of the total reactants, and SnCl₄ was set to 0.1 mol% based on 100 mol% of the total reactants.

### Example 8: Manufacture of Li₅.₂₅Al₀.₀₂₅Sn₀.₁P₀.₈₇₅S₄.₃₇₅Cl₁.₃₅ Solid Electrolyte

Li₅.₂₅Al₀.₀₂₅Sn₀.₁P₀.₈₇₅S₄.₃₇₅Cl₁.₃₅ solid electrolyte was manufactured in the same manner as in Example 1, except that x = 0.025 and y = 0.1, AlCl₃ was set to 0.025 mol% based on 100 mol% of the total reactants, and SnCl₄ was set to 0.1 mol% based on 100 mol% of the total reactants.

### Example 9: Manufacture of Li₅.₂₂Al₀.₀₃Sn₀.₁P₀.₈₇S₄.₃₅Cl₁.₃₆ Solid Electrolyte

Li₅.₂₂Al₀.₀₃Sn₀.₁P₀.₈₇S₄.₃₅Cl₁.₃₆ solid electrolyte was manufactured in the same manner as in Example 1, except that x = 0.03 and y = 0.1, AlCl₃ was set to 0.03 mol% based on 100 mol% of the total reactants, and SnCl₄ was set to 0.1 mol% based on 100 mol% of the total reactants.

### Example 10: Manufacture of Li₅.₁₆Al₀.₀₄Sn₀.₁P₀.₈₆S₄.₃Cl₁.₃₈ Solid Electrolyte

Li₅.₁₆Al₀.₀₄Sn₀.₁P₀.₈₆S₄.₃Cl₁.₃₈ solid electrolyte was manufactured in the same manner as in Example 1, except that x = 0.04 and y = 0.1, AlCl₃ was set to 0.04 mol% based on 100 mol% of the total reactants, and SnCl₄ was set to 0.1 mol% based on 100 mol% of the total reactants.

### Example 11: Manufacture of Li₅.₁Al₀.₀₅Sn₀.₁P₀.₈₅S₄.₂₅Cl₁.₄ Solid Electrolyte

Li₅.₁Al₀.₀₅Sn₀.₁P₀.₈₅S₄.₂₅Cl₁.₄ solid electrolyte was manufactured in the same manner as in Example 1, except that x = 0.05 and y = 0.1, AlCl₃ was set to 0.05 mol% based on 100 mol% of the total reactants, and SnCl₄ was set to 0.1 mol% based on 100 mol% of the total reactants.

### Comparative Example 1: Manufacture of Li₆PS₅Cl Solid Electrolyte

Reactants Li₂S, P₂S₅, and LiCl were mixed at 300 rpm for about 8 hours using a planetary mill to form a mixture.

Next, a pressure of 300 MPa was applied to the mixture to form a pellet.

Next, the pellet was heat-treated at 550°C in an argon (Ar) atmosphere to manufacture a Li₆PS₅Cl solid electrolyte.

### Comparative Example 2: Manufacture of Li₅.₈₈Al₀.₀₂P₀.₉₈S₄.₉Cl₁.₀₄ Solid Electrolyte

Li₅.₈₈Al₀.₀₂P₀.₉₈S₄.₉Cl₁.₀₄ solid electrolyte was manufactured in the same manner as in Example 1, except that x = 0.02 and y = 0, and AlCl₃ was set to 0.02 mol% based on 100 mol% of the total reactants.

### Comparative Example 3: Manufacture of Li₅.₄Sn₀.₁P₀.₉S₄.₅Cl₁.₃ Solid Electrolyte

Li₅.₄Sn₀.₁P₀.₉S₄.₅Cl₁.₃ solid electrolyte was manufactured in the same manner as in Example 1, except that x = 0 and y = 0.1, and SnCl₄ was set to 0.1 mol% based on 100 mol% of the total reactants.

### Comparative Example 4: Manufacture of Li₅.₇₆Al₀.₀₂Sn₀.₀₂P₀.₉₆S₄.₈Cl₁.₁ Solid Electrolyte

Li₅.₇₆Al₀.₀₂Sn₀.₀₂P₀.₉₆S₄.₈Cl₁.₁ solid electrolyte was manufactured in the same manner as in Example 1, except that x = 0.02 and y = 0.02, AlCl₃ was set to 0.02 mol% based on 100 mol% of the total reactants, and SnCl₄ was set to 0.02 mol% based on 100 mol% of the total reactants.

### Comparative Example 5: Manufacture of Li₂.₈₈Al₀.₀₂Sn₀.₅P₀.₄₈S₂.₄Cl₂.₅₄ Solid Electrolyte

Li₂.₈₈Al₀.₀₂Sn₀.₅P₀.₄₈S₂.₄Cl₂.₅₄ solid electrolyte was manufactured in the same manner as in Example 1, except that x = 0.02 and y = 0.5, AlCl₃ was set to 0.02 mol% based on 100 mol% of the total reactants, and SnCl₄ was set to 0.5 mol% based on 100 mol% of the total reactants.

### Comparative Example 6: Manufacture of Li_{5.37}Al_{0.005}Sn_{0.1}P_{0.895}S_{4.475}Cl_{1.31} Solid Electrolyte

Li_{5.37}Al_{0.005}Sn_{0.1}P_{0.895}S_{4.475}Cl_{1.31} solid electrolyte was manufactured in the same manner as in Example 1, except that x = 0.005 and y = 0.1, AlCl₃ was set to 0.005 mol% based on 100 mol% of the total reactants, and SnCl₄ was set to 0.1 mol% based on 100 mol% of the total reactants.

### Comparative Example 7: Manufacture of Li_{5.34}Al_{0.01}Sn_{0.1}P_{0.89}S_{4.45}Cl_{1.32} Solid Electrolyte

Li_{5.34}Al_{0.01}Sn_{0.1}P_{0.89}S_{4.45}Cl_{1.32} solid electrolyte was manufactured in the same manner as in Example 1, except that x = 0.01 and y = 0.1, AlCl₃ was quantified to be 0.01 mol% based on 100 mol% of the total reactants, and SnCl₄ was set to 0.1 mol% based on 100 mol% of the total reactants.

### Comparative Example 8: Manufacture of Li_{5.04}Al_{0.06}Sn_{0.1}P_{0.84}S_{4.2}Cl_{1.42} Solid Electrolyte

Li_{5.04}Al_{0.06}Sn_{0.1}P_{0.84}S_{4.2}Cl_{1.42} solid electrolyte was manufactured in the same manner as in Example 1, except that x = 0.06 and y = 0.1, AlCl₃ was set to 0.06 mol% based on 100 mol% of the total reactants, and SnCl₄ was set to 0.1 mol% based on 100 mol% of the total reactants.

The following Table 1 and Table 2 are tables summarizing the experimental results according to Experimental Examples 2 and 3 described below for the solid electrolytes of Examples and Comparative Examples.

**[Table 1]**

| | Composition | Li/P | S/P | Al/P | Sn/P | Cl/P |
|---|---|---|---|---|---|---|
| C-Ex. 1 | Li₆PS₅Cl | 6 | 5 | 0.000 | 0.000 | 1.000 |
| C-Ex. 2 | Li_{5.88}Al_{0.02}P_{0.98}S_{4.9}Cl_{1.04} | 6 | 5 | 0.020 | 0.000 | 1.061 |
| C-Ex. 3 | Li_{5.4}Sn_{0.1}P_{0.9}S_{4.5}Cl_{1.3} | 6 | 5 | 0.000 | 0.111 | 1.444 |
| C-Ex. 4 | Li_{5.76}Al_{0.02}Sn_{0.02}P_{0.96}S_{4.8}Cl_{1.1} | 6 | 5 | 0.021 | 0.021 | 1.146 |
| Ex. 1 | Li_{5.58}Al_{0.02}Sn_{0.05}P_{0.93}S_{4.65}Cl_{1.19} | 6 | 5 | 0.022 | 0.054 | 1.280 |
| Ex. 2 | Li_{5.28}Al_{0.02}Sn_{0.1}P_{0.88}S_{4.4}Cl_{1.34} | 6 | 5 | 0.023 | 0.114 | 1.523 |
| Ex. 3 | Li_{4.98}Al_{0.02}Sn_{0.15}P_{0.83}S_{4.15}Cl_{1.49} | 6 | 5 | 0.024 | 0.181 | 1.795 |
| Ex. 4 | Li_{4.68}Al_{0.02}Sn_{0.2}P_{0.78}S_{3.9}Cl_{1.64} | 6 | 5 | 0.026 | 0.256 | 2.103 |
| Ex. 5 | Li_{4.08}Al_{0.02}Sn_{0.3}P_{0.68}S_{3.4}Cl_{1.94} | 6 | 5 | 0.029 | 0.441 | 2.853 |
| Ex. 6 | Li_{3.48}Al_{0.02}Sn_{0.4}P_{0.58}S_{2.9}Cl_{2.24} | 6 | 5 | 0.034 | 0.690 | 3.862 |
| C-Ex. 5 | Li_{2.88}Al_{0.02}Sn_{0.5}P_{0.48}S_{2.4}Cl_{2.54} | 6 | 5 | 0.042 | 1.042 | 5.292 |
| C-Ex. 6 | Li_{5.37}Al_{0.005}Sn_{0.1}P_{0.895}S_{4.475}Cl_{1.31} | 6 | 5 | 0.006 | 0.112 | 1.464 |
| C-Ex. 7 | Li_{5.34}Al_{0.01}Sn_{0.1}P_{0.89}S_{4.43}Cl_{1.32} | 6 | 5 | 0.011 | 0.112 | 1.483 |
| Ex. 7 | Li_{5.31}Al_{0.015}Sn_{0.1}P_{0.885}S_{4.425}Cl_{1.33} | 6 | 5 | 0.017 | 0.113 | 1.503 |
| Ex. 8 | Li_{5.25}Al_{0.025}Sn_{0.1}P_{0.875}S_{4.375}Cl_{1.35} | 6 | 5 | 0.029 | 0.114 | 1.543 |
| Ex. 9 | Li_{5.22}Al_{0.03}Sn_{0.1}P_{0.87}S_{4.35}Cl_{1.36} | 6 | 5 | 0.034 | 0.115 | 1.563 |
| Ex. 10 | Li_{5.16}Al_{0.04}Sn_{0.1}P_{0.86}S_{4.3}Cl_{1.38} | 6 | 5 | 0.047 | 0.116 | 1.605 |
| Ex. 11 | Li_{5.1}Al_{0.05}Sn_{0.1}P_{0.85}S_{4.25}Cl_{1.4} | 6 | 5 | 0.059 | 0.118 | 1.647 |
| C-Ex. 8 | Li_{5.04}Al_{0.06}Sn_{0.1}P_{0.84}S_{4.2}Cl_{1.42} | 6 | 5 | 0.071 | 0.119 | 1.690 |

**[Table 2]**

| | Composition | x | y | Ionic Conductivity [mS/cm] | Initial Discharge Capacity (mAh/g) |
|---|---|---|---|---|---|
| C-Ex. 1 | Li₆PS₅Cl | - | - | 3.2 | 202 |
| C-Ex. 2 | Li_{5.88}Al_{0.02}P_{0.98}S_{4.9}Cl_{1.04} | 0.02 | - | 1.72 | 180 |
| C-Ex. 3 | Li_{5.4}Sn_{0.1}P_{0.9}S_{4.5}Cl_{1.3} | - | 0.1 | 1.58 | 178 |
| C-Ex. 4 | Li_{5.76}Al_{0.02}Sn_{0.02}P_{0.96}S_{4.8}Cl_{1.1} | 0.02 | 0.02 | 2.21 | 186 |
| Ex. 1 | Li_{5.58}Al_{0.02}Sn_{0.05}P_{0.93}S_{4.65}Cl_{1.19} | | 0.05 | 3.38 | 203 |
| Ex. 2 | Li_{5.28}Al_{0.02}Sn_{0.1}P_{0.88}S_{4.4}Cl_{1.34} | | 0.1 | 4.24 | 205 |
| Ex. 3 | Li_{4.98}Al_{0.02}Sn_{0.15}P_{0.83}S_{4.15}Cl_{1.49} | | 0.15 | 4.14 | 206 |
| Ex. 4 | Li_{4.68}Al_{0.02}Sn_{0.2}P_{0.78}S_{3.9}Cl_{1.64} | | 0.2 | 3.87 | 204 |
| Ex. 5 | Li_{4.08}Al_{0.02}Sn_{0.3}P_{0.68}S_{3.4}Cl_{1.94} | | 0.3 | 3.45 | 203 |
| Ex. 6 | Li_{3.48}Al_{0.02}Sn_{0.4}P_{0.58}S_{2.9}Cl_{2.24} | | 0.4 | 3.26 | 202 |
| C-Ex. 5 | Li_{2.88}Al_{0.02}Sn_{0.5}P_{0.48}S_{2.4}Cl_{2.54} | | 0.5 | 2.82 | 198 |
| C-Ex. 6 | Li_{5.37}Al_{0.005}Sn_{0.1}P_{0.895}S_{4.475}Cl_{1.31} | 0.005 | 0.1 | 2.04 | 182 |
| C-Ex. 7 | Li_{5.34}Al_{0.01}Sn_{0.1}P_{0.89}S_{4.45}Cl_{1.32} | 0.01 | | 2.17 | 184 |
| Ex. 7 | Li_{5.31}Al_{0.015}Sn_{0.1}P_{0.883}S_{4.425}Cl_{1.33} | 0.015 | | 3.64 | 203 |
| Ex. 8 | Li_{5.25}Al_{0.025}Sn_{0.1}P_{0.875}S_{4.375}Cl_{1.35} | 0.025 | | 4.43 | 205 |
| Ex. 9 | Li_{5.22}Al_{0.03}Sn_{0.1}P_{0.87}S_{4.35}Cl_{1.36} | 0.03 | | 4.28 | 203 |
| Ex. 10 | Li_{5.16}Al_{0.04}Sn_{0.1}P_{0.86}S_{4.3}Cl_{1.38} | 0.04 | | 3.57 | 203 |
| Ex. 11 | Li_{5.1}Al_{0.05}Sn_{0.1}P_{0.85}S_{4.25}Cl_{1.4} | 0.05 | | 3.24 | 201 |
| C-Ex. 8 | Li_{5.04}Al_{0.06}Sn_{0.1}P_{0.84}S_{4.2}Cl_{1.42} | 0.06 | | 2.75 | 195 |

### Experimental Example 1: XRD Diffraction Analysis Experiment

XRD (X-ray diffraction) diffraction analysis experiments were conducted on the solid electrolytes manufactured according to Comparative Example 1, Example 2, and Example 8, and the results are shown in FIG. 1.

Referring to FIG. 1, the solid electrolytes manufactured according to Comparative Example 1, Example 2, and Example 8 exhibited a peak in the range of 30.2° ≤ 2θ ≤ 30.3° during X-ray diffraction (XRD) pattern analysis. Through this, it could be confirmed that the solid electrolytes of Examples and Comparative Examples had an Argyrodite-based crystal structure.

### Experimental Example 2: Solid Electrolyte Composition Analysis and Ionic Conductivity Evaluation

### (1) Composition Analysis

The composition of the solid electrolyte was measured through ICP (Inductively Coupled Plasma Emission Spectrometry) equipment. More specifically, after all the synthesized solid electrolyte samples were dissolved in HNO₃ solvent, they were diluted with DI water, and the content of elements was measured with ICP equipment.

### (2) Ionic Conductivity Evaluation (30°C, 0.1C)

An ionic conductivity evaluation experiment of the solid electrolyte was conducted using a pressure powder cell. Specifically, after pulverizing the synthesized solid electrolyte, it was prepared in the form of a pellet under a pressure of 300 MPa. Thereafter, a cell was manufactured with a pressure of 70 MPa using SUS as a working electrode. Thereafter, impedance was measured by applying a voltage of 10 mV at 30°C.

Referring to Table 1 and Table 2, it could be confirmed that the solid electrolytes of Comparative Example 2 doped only with aluminum and Comparative Example 3 doped only with tin had rather lower ionic conductivity compared to Comparative Example 1, which is a basic Argyrodite crystal structure solid electrolyte.

In addition, in the case of Comparative Examples 4, 5, 6, 7, and 8, in which both aluminum and tin were doped, but the molar ratio of aluminum to phosphorus, the molar ratio of tin to phosphorus, or the ranges of x and y were not appropriately adjusted, the ionic conductivity was also lower than that of Comparative Example 1.

On the other hand, in the solid electrolytes of Examples in which both aluminum and tin were doped, and the molar ratio of aluminum to phosphorus, the molar ratio of tin to phosphorus, the molar ratio of the halogen element to phosphorus, or the ranges of x and y were appropriately adjusted, it could be confirmed that the ionic conductivity was improved compared to Comparative Example 1.

Analyzing the Examples in more detail, it could be confirmed that when the molar ratio of aluminum to phosphorus, the molar ratio of tin to phosphorus, the molar ratio of the halogen element to phosphorus, or the ranges of x and y were more appropriately adjusted, the ionic conductivity became very excellent at 4.0 mS/cm or more.

### Experimental Example 3: Lithium Secondary Battery Electrochemical Characteristic Evaluation

An initial discharge capacity evaluation experiment was conducted when the solid electrolytes manufactured according to Examples and Comparative Examples were applied to a battery. The specific experimental method is as follows.

Electrochemical evaluation of the solid electrolytes of Comparative Examples and Examples was conducted using a pressure powder cell. The composite positive electrode was positive electrode : solid electrolyte : conductive material (Denka black) = 70 : 29 : 1 wt%, and the electrode was manufactured by loading 20.0 mg in an area of 0.785 cm², and the density was increased at 300 MPa. Thereafter, bonding was performed at 50 MPa using an Indium-Lithium counter electrode, and the cell was assembled with the same pressure. After aging at room temperature for 2 hours after manufacture, a charge/discharge test was conducted. For capacity evaluation, 180 mAh/g was used as the reference capacity, and charge/discharge conditions of CC / CV 1.9 to 3.60 V, 1/20 C cut-off were applied. The initial capacity was performed under the conditions of 0.1 C charge / 0.1 C discharge.

Referring to Table 1 and Table 2, it could be confirmed that the solid electrolytes of Comparative Example 2 doped only with aluminum and Comparative Example 3 doped only with tin had rather lower initial discharge capacity compared to Comparative Example 1.

In addition, in the case of Comparative Examples 4, 5, 6, 7, and 8, in which both aluminum and tin were doped, but the molar ratio of aluminum to phosphorus, the molar ratio of tin to phosphorus, or the ranges of x and y were not appropriately adjusted, the initial discharge capacity was also lower than that of Comparative Example 1.

On the other hand, in the solid electrolytes of Examples in which both aluminum and tin were doped, and the molar ratio of aluminum to phosphorus, the molar ratio of tin to phosphorus, the molar ratio of the halogen element to phosphorus, or the ranges of x and y were appropriately adjusted, it could be confirmed that the initial discharge capacity was at a level equivalent to or more improved than that of Comparative Example 1.

Analyzing the Examples in more detail, it could be confirmed that when the molar ratio of aluminum to phosphorus, the molar ratio of tin to phosphorus, the molar ratio of the halogen element to phosphorus, or the ranges of x and y were more appropriately adjusted, the initial discharge capacity became very excellent at 205 mAh/g or more.

Although preferred embodiments of the present invention have been described above, the present invention is not limited thereto, and various modifications can be made within the scope of the claims, the detailed description of the invention, and the accompanying drawings, and these also naturally belong to the scope of the present invention.

Therefore, the substantial scope of the present invention will be defined by the appended claims and their equivalents.

## Claims

1. A sulfide-based solid electrolyte comprising lithium (Li), phosphorus (P), sulfur (S), and a halogen element, and having an Argyrodite-based crystal structure, wherein at least a portion of the crystal structure is doped with aluminum (Al) and tin (Sn), and wherein an ionic conductivity at 30°C is 3.2 mS/cm or more.

2. The sulfide-based solid electrolyte of claim 1, wherein the solid electrolyte has a molar ratio of aluminum (Al) to phosphorus (P) ([Al]/[P]) of 0.014 to 0.065.

3. The sulfide-based solid electrolyte of claim 1, wherein the solid electrolyte has a molar ratio of tin (Sn) to phosphorus (P) ([Sn]/[P]) of 0.04 to 0.8.

4. The sulfide-based solid electrolyte of claim 1, wherein the solid electrolyte has a molar ratio of lithium (Li) to phosphorus (P) ([Li]/[P]) of 5.5 to 6.5.

5. The sulfide-based solid electrolyte of claim 1, wherein the solid electrolyte has a molar ratio of sulfur (S) to phosphorus (P) ([S]/[P]) of 4.5 to 5.5.

6. The sulfide-based solid electrolyte of claim 1, wherein the solid electrolyte has a molar ratio of the halogen element (D) to phosphorus (P) ([D]/[P]) of 1.2 to 4.5.

7. The sulfide-based solid electrolyte of claim 1, wherein the solid electrolyte is represented by the following Chemical Formula 1:
[Chemical Formula 1] Li_{6(1-x-y)}AlₓSn_{y}P_{(1-x-y)}S_{5(1-x-y)}D_{1(1-x-y)}+3ₓ+4_{y}
In Chemical Formula 1, D is F, Cl, Br, I, or a combination thereof, 0.013 ≤ x ≤ 0.055, and 0.035 ≤ y ≤ 0.45.

8. The sulfide-based solid electrolyte of claim 7, wherein 0.02 ≤ x ≤ 0.035 is satisfied.

9. The sulfide-based solid electrolyte of claim 7, wherein 0.08 ≤ y ≤ 0.17 is satisfied.

10. A method for manufacturing a sulfide-based solid electrolyte, comprising: forming a mixture by mixing a lithium raw material, a phosphorus raw material, a halogen element raw material, and a doping raw material; and forming a sulfide-based solid electrolyte having an Argyrodite-based crystal structure by heat-treating the mixture, wherein the doping raw material comprises an aluminum (Al) compound and a tin (Sn) compound.

11. The method for manufacturing a sulfide-based solid electrolyte of claim 10, wherein the aluminum compound is AlCl₃.

12. The method for manufacturing a sulfide-based solid electrolyte of claim 10, wherein the tin compound is SnCl₄.

13. The method for manufacturing a sulfide-based solid electrolyte of claim 10, wherein an input amount of the aluminum compound is 0.013 to 0.055 mol% based on the total number of moles of the mixture.

14. The method for manufacturing a sulfide-based solid electrolyte of claim 10, wherein an input amount of the tin compound is 0.035 to 0.45 mol% based on the total number of moles of the mixture.

15. An all-solid-state battery comprising: a positive electrode layer; a negative electrode layer; and a solid electrolyte layer positioned between the positive electrode layer and the negative electrode layer, wherein at least one of the positive electrode layer, the negative electrode layer, and the solid electrolyte layer comprises the solid electrolyte according to claim 1.
